# EUROPEAN PATENT APPLICATION

(11) **EP 1 742 225 A2**
(43) Date of publication of application: **10.01.2007**
(21) Application number: 06013613.2
(22) Date of filing: 30.06.2006
(51) Int. Cl.: G11B 33/14

(54) **Hard disk drive with air circulation unit**

(30) Priority: 30.06.2005 KR 20050057650
(71) Applicant: Samsung Electronics Co., Ltd., Suwon-si, Gyeonggi-Do (KR)
(72) Inventor: Lim, Hong-taek, Suwon-si Gyeonggi-do (KR)
(74) Representative: Grünecker, Kinkeldey, Stockmair & Schwanhäusser Anwaltssozietät

(57) **Abstract**

A hard disk drive with an air circulation unit. The hard disk drive includes a housing (110) having a base (111) and a cover (112), a spindle motor (130) installed on the base (111), a disk (120) mounted on the spindle motor (130) to store data, an actuator (140) pivotally installed on the base (111) and having a read/write head to write data on the disk (120) or to reproduce the data from the disk, and an air circulation unit (152) installed in the housing (110) to circulate air vertically in the housing by moving air flow produced by rotation of the disk (120) vertically. The air circulation unit (152) may be arranged around the disk (120) so that the air circulation unit (152) is positioned adjacent to an edge of the disk. In particular, the air circulation unit (152) may be installed at a position opposite to the actuator (140) with respect to a center of the disk. The air circulation unit (152) includes at least one of an air ascending member to move air from a lower portion of the disk (120) upward to an upper portion of the disk (120) and an air descending member to move air from the upper portion of the disk (120) downward to the lower portion of the disk. The air below or above the disk (120) is easily moved toward the upper portion or lower portion of the disk (120) by the air circulation unit (152), thereby smoothly circulating the air in the housing (110) and thus improving a filtering efficiency for particles and a temperature characteristic in the housing (110).

## Description

### BACKGROUND OF THE INVENTION

### 1. Field of the Invention

The present general inventive concept relates to a hard disk drive, and more particularly, to a hard disk drive with an air circulation unit to smoothly circulate air in the hard disk drive.

### 2. Description of the Related Art

A hard disk drive (HDD) is an information storage apparatus usable in a personal computer to reproduce (i.e., read) data from a disk or to write data on a disk using a read/write head.

A conventional hard disk drive includes a housing having a base and a cover, a spindle motor mounted on the base, at least one disk installed on the spindle motor for storing data thereon, and an actuator for moving a read/write head, which reproduces or writes data from or on the disk, to a desired position on the disk. The head is moved to the desired position by the actuator while maintaining the head at a desired height (distance) above a recording surface of the rotating disk.

With the hard disk drive configured as described above, when the disk rotates, air flow circulates in the housing. Hence, particles also circulate together with the air flow in the housing, and are filtered by a filter installed in the housing.

The hard disk drive is provided on a bottom surface of the base with a printed circuit board disposed on a bottom surface of the base for actuating the spindle motor and the actuator. A plurality of circuit devices are mounted on the printed circuit board, and heat generated from the circuit devices is conducted to an interior of the housing through the base. The heat conducted to the interior of the housing circulates together with the air flow in the housing, so that the heat is uniformly distributed in the housing.

In a conventional 3.5 or 2.5 inch hard disk drive, since an internal space of the housing is relatively wide, smooth air circulation may be achieved in the housing through the heat conduction described above.

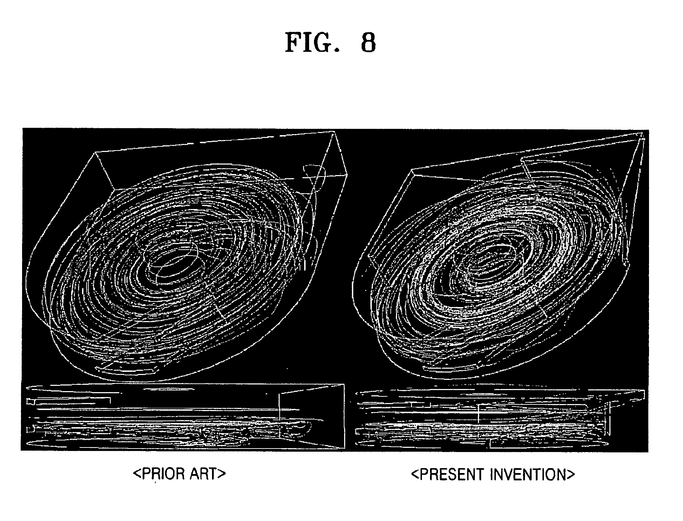

In a conventional 1 inch or less hard disk drive, however, since an interval between the disk and the base and an interval between the disk and the cover is narrow, laminar flow of air is created therebetween. Air flow between upper and lower portions of the disk (i.e., the laminar air flow) is desirable, since it reduces a vibration of the disk. However in the compact conventional hard disc drive, the air above the disk is hardly interchanged with air under the disk. Hence, as illustrated in a left view of FIG. 8, the air flowing under the disk remains under the disk and hardly moves towards the upper portion of the disk, and the air flowing above the disk remains above the disk without moving toward the lower portion of the disk. Specifically, a compact conventional hard disk drive has a drawback in that vertical circulation of air is hardly achieved in the housing.

The compact conventional hard disk drive generally includes a filter attached to a bottom surface of the cover for collecting particles. In this case, if air circulation is not smoothly achieved in the housing, the air under the disk does not easily flow toward the upper portion of the disk, and particles contained in the air flowing under the disk are hardly filtered. Hence, there is a problem in that the spindle motor, the disk, and the actuator are easily contaminated by the particles, thereby negatively impacting their performance.

Also, since the heat conducted from the printed circuit board installed on the bottom surface of the base stays under the disk, reliability of the hard disk drive may be negatively affected due to a partial temperature rise.

### SUMMARY OF THE INVENTION

The present general inventive concept provides a hard disk drive with an air circulation unit which can improve an efficiency of filtering of particles and a temperature characteristic in a housing of the hard disk drive by smoothly circulating air in the housing.

Additional aspects of the present general inventive concept will be set forth in part in the description which follows and, in part, will be obvious from the description, or may be leamed by practice of the general inventive concept.

The foregoing and/or other aspects of the present general inventive concept may be achieved by providing a hard disk drive including a housing having a base and a cover, a spindle motor installed on the base, a disk mounted on the spindle motor to store data, an actuator pivotally installed on the base and having a read/write head to write data on the disk or to reproduce the data from the disk, and an air circulation unit installed in the housing and adapted to impart a vertical movement component to air flow produced by rotation of the disk. This results in an air circulation in vertical direction obtained by the exchange of air because of said vertical movement component.

The air circulation unit may be partially arranged around the disk so that the air circulation unit is positioned adjacent to an edge of the disk. In particular, the air circulation unit may be installed at a position opposite to the actuator with respect to a center of the disk.

The air circulation unit may include at least one of an air ascending member to move air from a lower portion of the disk upward to an upper portion of the disk, and an air descending member to move air from the upper portion of the disk downward to the lower portion of the disk.

The air ascending member may be installed in at least one of two corners of the housing which are spaced apart from the actuator.

The air descending member may be installed in at least one of two corners of the housing which are spaced apart from the actuator.

The air ascending member may be installed in one of two corners of the housing which are spaced apart from the actuator, and the air descending member is installed in the other corner.

The air ascending member may be attached to an upper surface of the base, or may be formed integrally with the base. The air descending member may be attached to a lower surface of the cover, or may be formed integrally with the cover.

The air ascending member may include an air guide surface to guide an ascent of the air, an air inlet end of the air guide surface positioned below a lower surface of the disk, and an air discharge end of the air guide surface positioned above an upper surface of the disk. A spacing between the air inlet end of the air guide surface and the lower surface of the disk may be larger than half of a spacing between an upper surface of the base and the lower surface of the disk. In addition, a spacing between the air discharge end of the air guide surface and the upper surface of the disk may be larger than half of a spacing between a lower surface of the cover and the upper surface of the disk.

The air descending member may include an air guide surface to guide a descent of the air, an air inlet end of the air guide surface positioned above an upper surface of the disk, and an air discharge end of the air guide surface positioned under a lower surface of the disk. A spacing between the air inlet end of the air guide surface and the upper surface of the disk may be larger than half of a spacing between a lower surface of the cover and the upper surface of the disk. In addition, a spacing between the air discharge end of the air guide surface and the lower surface of the disk may be larger than half of a spacing between an upper surface of the base and the lower surface of the disk.

The air guide surface may have various profiles including, for example, a profile inclined at a constant angle along a circumferential direction of the disk, a round profile, or a streamline profile.

The foregoing and/or other aspects of the present general inventive concept may also be achieved by providing a storage medium, including a housing, a hard disk assembly disposed in the housing, and an air circulation unit disposed at an inner wall of the housing and having a predetermined surface to guide air vertically in the housing.

The foregoing and/or other aspects of the present general inventive concept may also be achieved by providing a hard disk drive including a housing, a recording medium disk rotated in the housing and dividing the housing into upper and lower portions, and an air circulation unit disposed along an inner wall of the housing adjacent to the disk and having a curved shape that corresponds to the disk and having an air guide surface to guide air that moves between the lower and upper portions of the housing according to a rotation of the disk.

The foregoing and/or other aspects of the present general inventive concept may also be achieved by providing a hard disk drive including a housing having an inner wall, a disk rotating in the housing, and an air circulation unit having a curved shape to accommodate an edge of the disk and having an air guide surface formed between the curved shape and the inner wall and being gradually slanted between a first circumferential end of the curved shape at an upper portion of the disk and a second circumferential end of the curved shape at a lower portion of the disk.

The foregoing and/or other aspects of the present general inventive concept may also be achieved by providing a hard disk drive including a housing, a disk rotating in the housing, an air circulation unit disposed adjacent to an edge of the disk to generate an air flow according to a rotation of the disk to move air between a first vertical space between the disk and the housing and a second vertical space between the disk and the housing opposite the first vertical space.

The foregoing and/or other aspects of the present general inventive concept may also be achieved by providing a hard disk drive housing including a base, a cover couplable to the base to form an enclosure, and at least one air circulation unit disposed at a first location on an inner wall of the enclosure and having an air guide surface disposed along the inner wall to move air vertically in the enclosure.

The foregoing and/or other aspects of the present general inventive concept may also be achieved by providing a hard disk drive including a housing, a disk disposed in the housing, and an air circulation unit disposed between the disk and the housing and having a first surface formed in a circumferential direction of the disk and a second surface formed between the first surface and the housing and inclined with respect to a major surface of the disk to guide air to move between upper and lower portions of the housing with respect to the disk.

With the structure described above, the air below or above the disk is easily moved between the upper portion or lower portion of the disk by the air circulation unit, thereby smoothly circulating the air in the housing. Hence, the present general inventive concept can improve a filtering efficiency for particles and a temperature characteristic in the housing.

### BRIEF DESCRIPTION OF THE DRAWINGS

These and/or other aspects of the present general inventive concept will become apparent and more readily appreciated from the following description of the embodiments, taken in conjunction with the accompanying drawings of which:
FIG. 1 is an exploded perspective view illustrating a hard disk drive with an air circulation unit according to an embodiment of the present general inventive concept;
FIG. 2 is a cross-sectional view of the hard disk drive of FIG. 1;
FIG. 3 is an enlarged perspective view of an air ascending member of the hard disk drive of FIG. 1;
FIGS. 4A through 4J are cross-sectional views taken along a line A-A' of the air ascending member of FIG. 3, illustrating a profile of an air guide surface, according to various embodiments of the present general inventive concept;
FIG. 4K is a top view illustrating the air ascending member of FIG. 4H;
FIG. 5 is an exploded perspective view illustrating a hard disk drive with an air circulation unit according to another embodiment of the present general inventive concept;
FIG. 6 is a cross-sectional view of the hard disk drive of FIG. 5;
FIG. 7 is an exploded perspective view illustrating a hard disk drive with an air circulation unit according to yet another embodiment of the present general inventive concept; and
FIG. 8 is a view illustrating results of a comparative analysis of air circulation between a conventional hard disk drive and a hard disk drive of the embodiments of the present general inventive concept.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

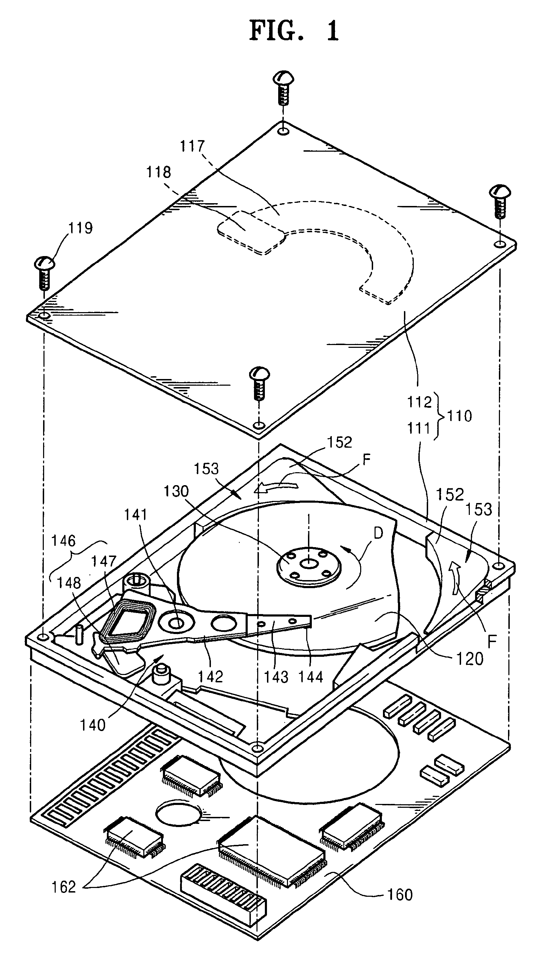

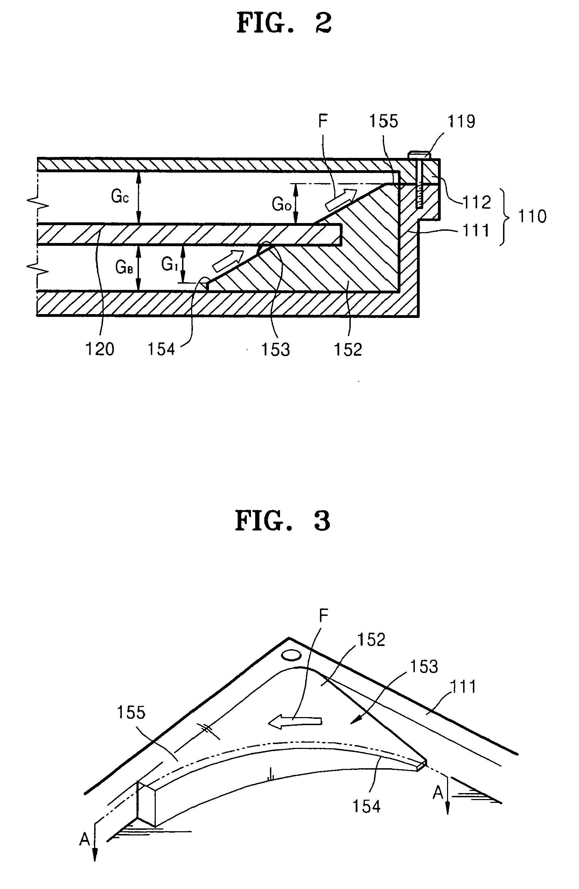

FIG. 1 is an exploded perspective view illustrating a hard disk drive with an air circulation unit according to an embodiment of the present general inventive concept. FIG. 2 is a cross-sectional view of the hard disk drive of FIG. 1. FIG. 3 is an enlarged perspective view of an air ascending member 152 of the hard disk drive of FIG. 1.

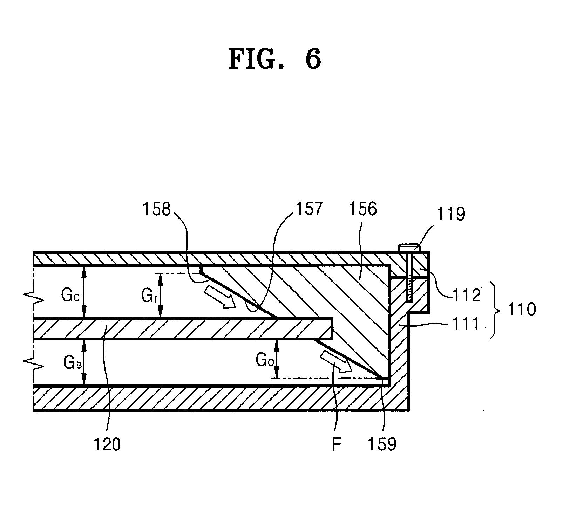

Referring to FIGS. 1 through 3, the hard disk drive of the present embodiment includes a housing 110 having a base 111 and a cover 112, a spindle motor 130 installed in the housing 110, a disk 120 to store data, an actuator 140 having a write/read head to read and write the data on and from the disk 120, and the air circulation unit installed in the housing 100 to also vertically circulate air by exchange of air because ascending and/or descending flow of air, see also FIG. 6.

The housing 110 includes the base 111 to support the spindle motor 130 and the actuator 140, and the cover 112 fixed to an upper portion of the base 111 via a plurality of fastening screws 119 such that the disk 120 is enclosed between the base 111 and the cover 112. The housing 120 may be made of stainless steel or aluminum. For example, the base 111 and the cover 112 may be made by pressing a stainless steel plate.

A breath filter 117 that equalizes internal atmospheric pressure of the housing 110 with extemal atmospheric pressure is provided under a lower surface of the cover 112. Additionally, an adsorption filter 118 to filter particles in the housing 110 is also provided under the lower surface of the cover 112. Alternatively, the adsorption filter 118 may be provided at another position in the housing 110, for example, at an upper surface of the base 111.

The hard disk drive is provided with a printed circuit board 160 disposed on a bottom surface of the base 111 to actuate the hard disk drive, and a plurality of circuit devices 162 are mounted on a surface of the printed circuit board 160.

The disk 120 is a data storage medium, and at least one disk is mounted on the spindle motor 130. The spindle motor 130 is installed on the base 111 to rotate the disk 120.

The actuator 140 moves the read/write head to a desired position of the disk 120 to write data on the disk 120 or to reproduce (i.e., read) data from the disk 120. The actuator 140 is pivotally installed on the base 111. Specifically, the actuator 140 includes a swing arm 142 rotatably connected to an actuator pivot 141 installed to the base 111, a suspension 143 fixed to a first end of the swing arm 142 to bias a slider 144 having the read/write head mounted thereon towards a surface of the disk 120, and a voice coil motor (VCM) 146 to rotate the swing arm 142. The voice coil motor 146 includes a VCM coil 147 coupled to a second end of the swing arm 142 that is opposite to the first end, and a magnet 148 facing the VCM coil 147.

The voice coil motor 146 is controlled by a servo control system to rotate the swing arm 142 in a direction that corresponds to Fleming's left-hand rule, by the interaction of a magnetic field induced by the magnet 148 and a current applied to the VCM coil 147. Specifically, when the hard disk drive is turned on and the disk 120 starts rotating in a direction indicated by an arrow D, the voice coil motor 146 rotates the swing arm 142 in one direction to move the slider 144 having the read/write head mounted thereon toward a data recording surface of the disk 120. The slider 144 is suspended above the surface of the disk 120 at a desired height by a lift force generated by rotation of the disk 120. In this state, the head mounted on the slider 144 writes the data on the disk 120 and reads the data from the disk 120. However, when the hard disk drive is not operated (i.e., when the disk 120 stops rotating), the voice coil motor 146 rotates the swing arm 142 in a reverse direction so that the slider 144 having the head mounted thereon moves away from the data recording surface of the disk 120.

The air circulation unit is installed in the housing 100 to circulate the air vertically in the housing 100. Specifically, the air circulation unit may include the air ascending member 152 to ascend air from below the disk 120 by moving an air flow from a space between the disk 120 and the base 111 (i.e., a lower portion of the disk 120) toward a space between the cover 110 and the disk 120 (i.e., an upper portion of the disk 120). At least one air ascending member 152 may be installed around the disk 120 to be positioned adjacent to an edge of the disk 120. In particular, the air ascending member 152 may be installed at a position opposite to the actuator 140 with respect to a center of the disk 120 such that the actuator 140 is not affected by the air ascending member 152. For example, as illustrated in FIG. 1, the air ascending member 152 may be installed in two corners of the housing 110 which are maximally spaced apart from the actuator 140, respectively. Alternatively, one air ascending member 152 may be installed in one corner of the housing 110.

The air ascending member 152 may be made of plastic molding, and may be attached to the base 111 using an adhesive or screws (not shown). Alternatively, other fasteners that achieve the intended purposes set forth herein may also be used to fix the air ascending member 152 to the base 111. In this case, the air ascending member 152 may be formed separately from the base 111.

Alternatively, the air ascending member 152 may be formed integrally with the base 111. Specifically, when the base 111 is made of a stainless steel through pressing, the air ascending member 152 may be simultaneously formed together in the same process.

The air ascending member 152 has an air guide surface 153 to ascend the air from the lower portion of the disk 120 to the upper portion of the disk 120. As illustrated in FIGS. 2 and 3, an air inlet end 154 of the air guide surface 153 is positioned below the lower surface of the disk 120, and an air discharge end 155 is positioned above the upper surface of the disk 120. Hence, the air guide surface 153 has a profile generally inclined toward the air discharge end 155 from the air inlet end 154 such that air F moves rotationally and ascends along the air guide surface 153.

Referring to FIG. 2, a spacing G_{I} between the air inlet end 154 of the air guide surface 153 and the lower surface of the disk 120 may be larger than half of a spacing G_{B} between an upper surface of the base 111 and the lower surface of the disk 120 so that the air under the disk 120 easily flows along the air guide surface 153. Also, a spacing Go between the air discharge end 155 of the air guide surface 153 and the upper surface of the disk 120 may be larger than half of a spacing G_{c} between a lower surface of the cover 112 and the upper surface of the disk 120 so that a large portion of the air F ascending along the air guide surface is discharged toward the upper portion of the disk 120. Thus, as illustrated in FIG. 3, the air F flows over the air inlet end 154 along the air guide surface 153 until the air is above the upper surface of the disk 120 where it flows over the discharge end 155. It should be understood that the disk 120 appears to extend into the air ascending member 152 in the cross-sectional view of FIG. 2, because the air ascending member 152 has a curved shape that accommodates the edge of the disk 120. Accordingly, when viewed from a particular perspective (e.g. from a point that is outside the corner of the base 111), a portion of the air ascending member 152 extends further into the cross-sectional view of FIG. 2. Thus, the disk 120 may appear to extend into portions of the air ascending member 152, when in fact, the edge of the disk 120 is accommodated along the air ascending member 152 such that the air flow F can be moved between the lower and upper portions of the disk 120 around an edge of the disk 120 and over the air ascending member 152.

Additionally, as illustrated in FIG. 1, the air F moves along a curved portion of the air guide surface 153 in a rotational direction. The air guide surface 152 is arranged around the edge of the disk 120 such that as the air F is moved around the edge of the disk 120, the air F also ascends along the air guide surface 153 as illustrated in FIGS. 2 and 3. FIG. 2 illustrates the air F ascending along the air guide surface 153. Although it appears that the air F is penetrating the disk 120, the air F is actually moving around the disk 120 to ascend along a ramp-like structure created by the air guide surface 153 disposed horizontally adjacent with respect to the edge of the disk 120. The air F only appears to be penetrating the disk 120 due to the particular perspective of FIG. 2, which is outside of the corner of the base 111.

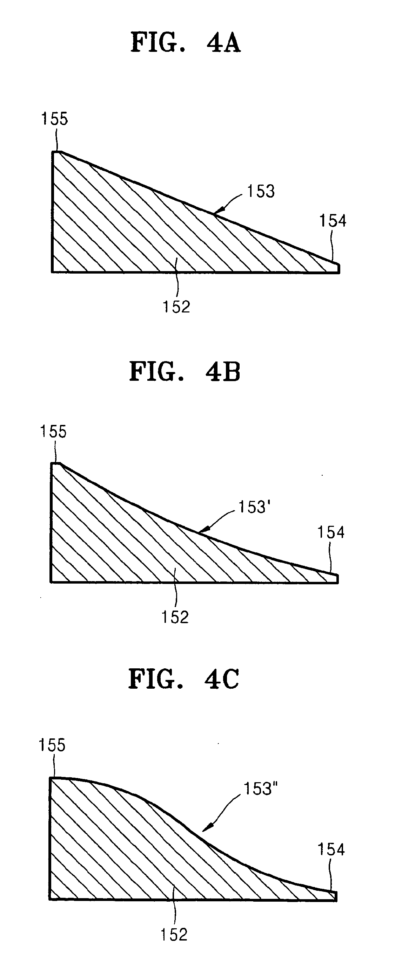

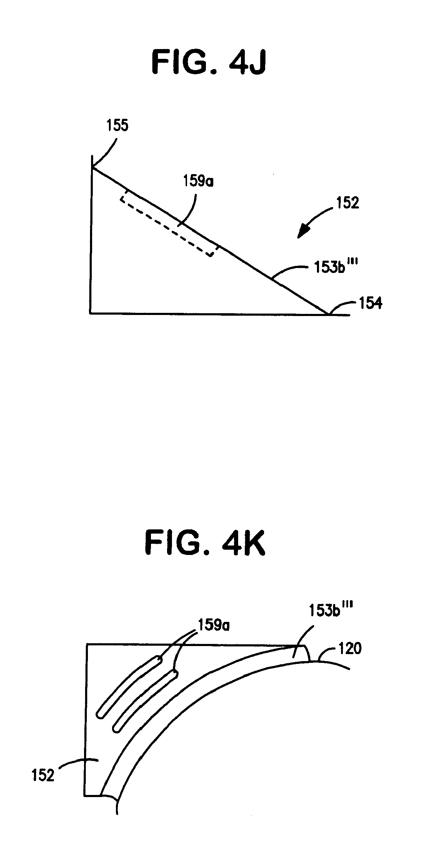

FIGS. 4A through 4C are cross-sectional views taken along a line A-A' of the air ascending member 152 of FIG. 3, illustrating a profile of the air guide surface according to various embodiments of the present general inventive concept.

Referring to FIG. 4A, the air guide surface 153 of the air ascending member 152 may have a profile that is inclined at a constant angle along a circumferential direction of the disk 120.

As illustrated in FIG. 4B, an air guide surface 153' may have a round or concave profile, and as illustrated in FIG. 4C, an air guide surface 153" may have a streamline profile. The air guide surfaces 153' and 153" illustrated in FIGS. 4B and 4C allow air to flow easily from the lower portion of the disk 120 through the air inlet end 154 up over the air guide surface 153, 153', and 153".

The air ascending member 152 may have an air guide surface of other profiles.

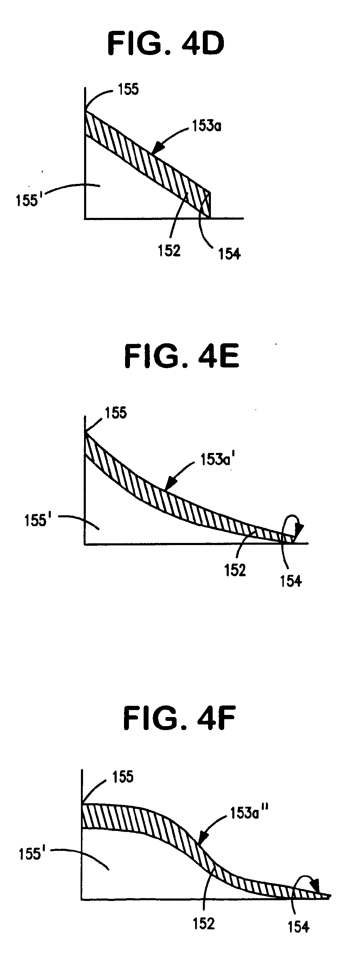

FIG. 4D illustrates the air ascending member 152 formed of a plate having an air guide surface 153a that is inclined at a constant angle, the air inlet end 154, the air discharge end 155, and a space 155' between the air guide surface 153a and the base 111 (see FIG. 3). FIG. 4E illustrates the air ascending member 152 formed of a plate having an air guide surface 153a' that is curved or concave, the air discharge end 155, the air inlet end 154, and the space 155' between the air guide surface 153a' and the base 111 (see FIG. 3). FIG. 4F illustrates the air ascending member 152 formed of a plate having an air guide surface 153a" that is streamlined, the air discharge end 155, the air inlet end 154, and the space 155'.

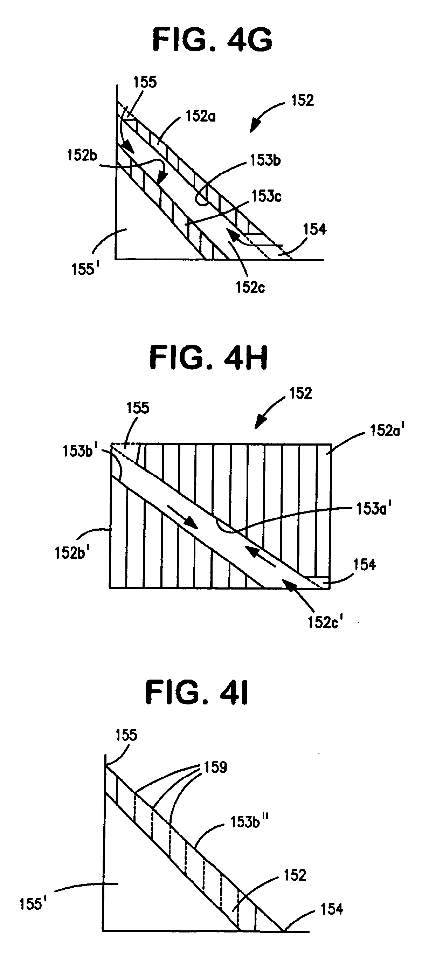

FIG 4G illustrates the air ascending member 152 having a first plate 152b with a first air guide surface 153c and a second plate 152a with a second air guide surface 153b, an air passage 152c between the first and second plates 152b and 152a along which air flows upward, the air inlet end 154, and the air discharge end 155. The air inlet end 154 and the air discharge end 155 may be portions that are removed from the second plate 152a (indicated by the dotted lines) at opposite circumferential ends of the air ascending member 152 with respect to the center of the disk 120. Thus, air that circulates horizontally due to the rotation of the disk 120 under the disk 120 may enter the air inlet end 154 and be guided along the air passageway 152c upward between the first and second plates 152b and 152a and around a circumferential direction of the air ascending member 152 to be discharged from the air discharge end 155 above the disk 120. Additionally, air can be guided along both the first and second air guide surfaces 153a and 153b. FIG. 4H illustrates a similar arrangement to the air ascending member 152 of FIG. 4E including first and second guide members 152b' and 152a' that form an air passageway 152c' therebetween. The first guide member 152b' includes an air guide surface 153a', and the second guide member 152a' includes an air guide surface 153b', the air inlet end 154, and the air discharge end 155 that may be cut outs of the second guide member 152a' at opposite circumferential ends of the air ascending member 152. The first guide member 152b' are the second guide member 152a' may be formed on one of the cover 112, the base 111, or a sidewall of the base 111. FIG. 41 illustrates the air ascending member 152 of a plate shape having an air guide surface 153b" with a plurality of holes 159 extending therethrough to the spacing 155', the air inlet end 154, and the air discharge end 155. FIG. 4J illustrates the air ascending member 152 having an air guide surface 153b"' with one or more grooves 159a in which air can flow around the air guide surface 153b"', the air inlet end 154, and the air discharge end 155. FIG. 4K is a top view illustrating the air ascending member 152 of FIG. 4H.

The operation of the air circulation unit according to the present embodiment will now be described with reference to FIGS. 1 through 3.

When the disk 120 starts rotating in a direction indicated by arrow D, the air flow is respectively produced above and under the disk 120 in the same direction as a rotational direction of the disk 120. At that time, a portion of the air flow under the disk 120 ascends along an upper portion of the air guide surface 153 of the air ascending member 152, and the ascending air F is discharged toward the upper portion of the disk 120. When the air is moved up by the air ascending member 152, the pressure of the air flowing above the disk 120 is increased so that a pressure difference is created between the upper and lower portions of the disk 120. The air is naturally moved down in other portions of the housing 110 due to this pressure difference.

Hence, in the hard disk drive according the present embodiment, the air flows horizontally by the rotation of the disk 120 in the housing 110, and the air is smoothly vertically circulated by the air ascending member 152.

As described above, if the air is smoothly vertically circulated in the housing 110, the air is easily moved from the lower portion of the disk 120 to the upper portion. Accordingly, particles contained in the air below the disk 120 may be easily filtered by the adsorption filter 118 attached to the lower surface of the cover 112. The heat conducted from the printed circuit board 160 installed on the lower surface of the base 111 can be uniformly distributed in the housing 110 by the vertical circulation of the air, thereby preventing reliability of the hard disk drive from being negatively affected by the concentration of the heat.

FIG. 8 is a view illustrating results of a comparative analysis between air circulation in a conventional hard disk drive and air circulation in a hard disk drive according embodiments of the present general inventive concept. This comparison analyzes a stream line of the air flow according to the rotation of the disk, assuming that a given point under the disk is a start point of the air flow in a compact hard disk drive.

FIG. 8 illustrates that the air under the disk does not flow toward the upper portion of the disk in the conventional compact hard disk drive, but instead remains under the disk. That is, the vertical circulation of the air is not achieved in the housing of the conventional compact hard disk drive.

On the other hand, in the compact hard disk drive according to the embodiments of the present general inventive concept, however, the air under the disk 120 moves up toward the upper portion of the disk 120 by the air ascending member 152 so that a substantial air flow exists between the lower and upper portions of the disk 120. That is, according to the embodiments of the present general inventive concept, the air flows smoothly up and down in the housing 110.

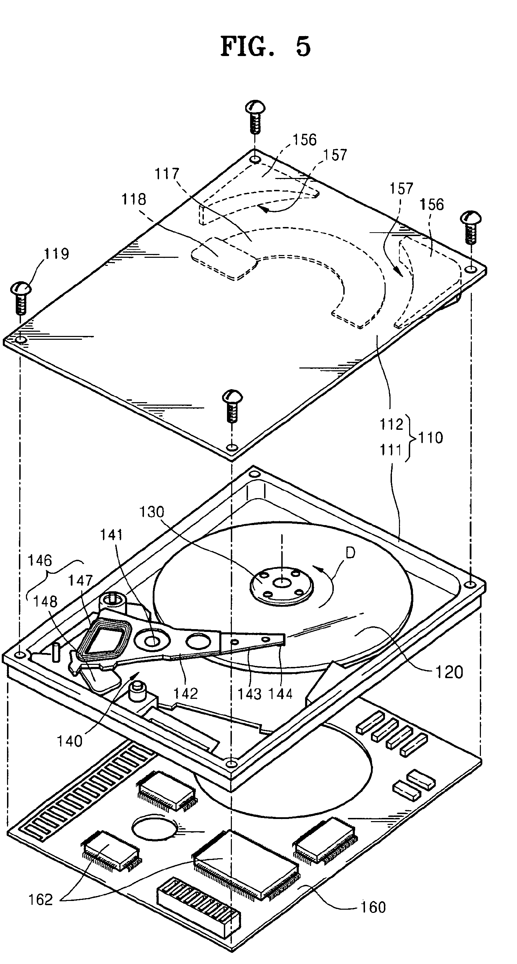

FIG. 5 is an exploded perspective view illustrating a hard disk drive with an air circulation unit according to another embodiment of the present general inventive concept. FIG. 6 is a cross-sectional view of the hard disk drive of FIG. 5. Some of the components of the hard disk drive of FIG. 5 are similar to the components of the hard disk drive of FIG. 1, thus the same reference numbers refer similar components.

Referring to FIGS. 5 and 6, the air circulation unit provided in the hard disk drive according to the present embodiment includes an air descending member 156 to descend air from above the disk 120 to below the disk 120 by moving an air flow in a space between the disk 120 and the cover 112 downward to a space between the disk 120 and the base 111. At least one air descending member 156 may be installed around the disk 120 to be adjacent to an edge of the disk 120. In particular, the air descending member 156 may be installed at a position opposite to the actuator 140 with respect to the center of the disk 120 such that the actuator 140 is not affected by the air descending member 156. For example, as illustrated in FIG. 5, the air descending member 156 may be installed in two corners of the housing 110 which are maximally spaced apart from the actuator 140, respectively. Alternatively, one air descending member 156 may be installed in one corner of the housing 110.

The air descending member 156 may be made of plastic molding, and may be attached to the cover 112 using an adhesive or screws (not shown). Alternatively, other fasteners that achieve the intended purposes set forth herein may also be used to fix the air descending member 156 to the cover 112. In this case, the air descending member 156 may be formed separately from the cover 112.

Alternatively, the air descending member 156 may be formed integrally with the cover 112. Specifically, when the cover 112 is made of a stainless steel through pressing, the air descending member 156 may be simultaneously formed in the same process.

The air descending member 156 has an air guide surface 157 to descend the air from the upper portion of the disk 120 to the lower portion of the disk 120. Referring to FIG. 6, an air inlet end 158 of the air guide surface 157 is positioned above the upper surface of the disk 120, and an air discharge end 159 is positioned below the lower surface of the disk 120. Hence, the air guide surface 157 has a profile generally inclined toward the air discharge end 159 from the air inlet end 158.

Referring to FIG. 6, a spacing G_{I} between the air inlet end 158 of the air guide surface 157 and the upper surface of the disk 120 may be larger than half of a spacing G_{B} between the lower surface of the cover 112 and the upper surface of the disk 120 so that the air above the disk 120 easily flows along the air guide surface 157 downward. Also, a spacing Go between the air discharge end 159 of the air guide surface 157 and the lower surface of the disk 120 may be larger than half of a spacing G_{c} between the upper surface of the base 111 and the lower surface of the disk 120 so that more air F that descends along the air guide surface 157 is discharged toward the lower portion of the disk 120. Thus, as illustrated in FIGS. 5 and 6, the air F flows under the air inlet end 158 and along the air guide surface 157 until the air F is below the lower surface of the disk 120 where it flows under the discharge end 159. It should be understood that the disk 120 appears to extend into the air descending member 156 in the cross-sectional view of FIG. 6, because the air descending member 156 has a curved shape that accommodates the edge of the disk 120. Accordingly, when viewed from a particular perspective (e.g. from a point that is outside the corner of the cover 112), a portion of the air descending member 156 extends further into the cross-sectional view of FIG. 6. Thus, the disk 120 may appear to extend into portions of the air descending member 156, when in fact, the edge of the disk 120 is accommodated along the air descending member 156 such that the air flow F can be moved between the upper and lower portions of the disk 120 around an edge of the disk 120 and under the air descending member 156.

Additionally, as illustrated in FIGS. 5 and 6, the air F moves along a curved portion of the air guide surface 157 in a rotational direction. The air guide surface 157 is arranged around the edge of the disk 120 such that as the air F is moved around the edge of the disk 120, the air F also ascends along the air guide surface 157 as illustrated in FIGS. 5 and 6. That is, FIG. 6 illustrates the air F descending along the air guide surface 157. Although it appears that the air F is penetrating the disk 120, the air F is actually moving around the disk 120 to descend along a ramp-like structure created by the air guide surface 157 disposed horizontally adjacent with respect to the edge of the disk 120. The air F only appears to be penetrating the disk 120 due to the particular perspective of FIG. 6, which is outside of the corner of the cover 112.

The air guide surface 157 of the air descending member 156 may have various profiles, which may be similar to the profiles illustrated in FIGS. 4A through 4J.

Referring to FIGS. 5 and 6, in the hard disk drive according to the present embodiment, a portion of the air flow above the disk 120 produced by the rotation of the disk 120 descends along a lower portion of the air guide surface 157 of the air descending member 156, and the descending air F is discharged toward the lower portion of the disk 120. The air is naturally moved up in other portions of the housing 110 by a pressure difference created between the upper and lower portions of the disk 120 due to the air that is descended by the air descending member 156.

Hence, the air is smoothly vertically circulated by the air descending member 156 in the housing 110.

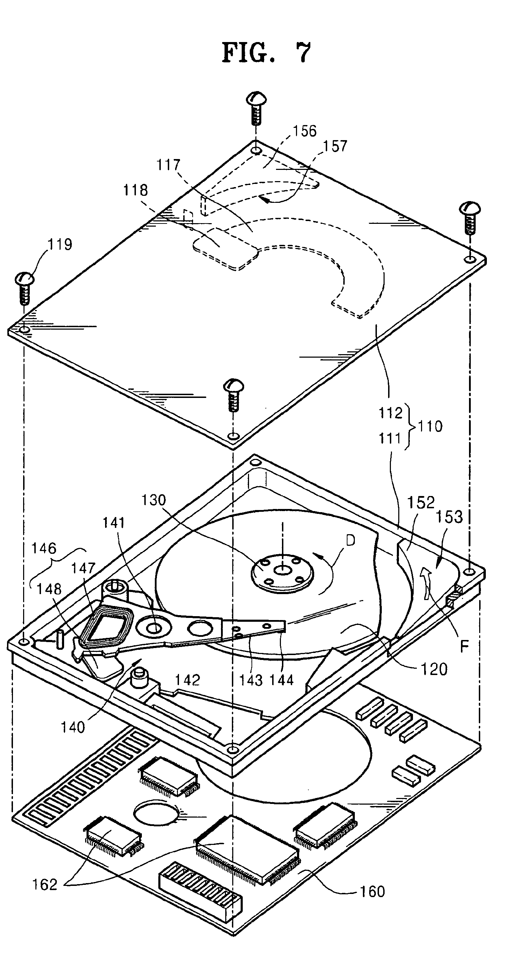

FIG. 7 is an exploded perspective view illustrating a hard disk drive with an air circulation unit according to yet another embodiment of the present general inventive concept. Some of the components of the hard disk drive of FIG. 7 are similar to the components of the hard disk drives of FIGS. 1 and 5, thus the same reference numbers are used to refer similar components.

Referring to FIG. 7, the air circulation unit provided in the hard disk drive of the present embodiment includes the air ascending member 152 to ascend air flow under the disk 120 and the air descending member 156 to descend air flow above the disk 120. At least one air ascending member 152 and at least one air descending member 156 may be installed around the disk 120 so that the air ascending and descending members 152 and 156 are positioned adjacent to the edge of the disk 120. For example, as illustrated in FIG. 7, the air ascending member 152 may be installed in one corner of the housing 110 which is maximally spaced apart from the actuator 140, and the air descending member 156 may be installed in the other corner of the housing 110.

The structures of the air ascending member 152 and the air descending member 156 are similar to those of previous embodiments. Accordingly, a description thereof will not be provided here.

In the hard disk drive of the present embodiment, a portion of the air flow below the disk 120 produced by the rotation of the disk 120 ascends along the upper portion of the air guide surface 153 of the air ascending member 152 around the edge of the rotating disk 120, and the ascending air F is discharged toward the upper portion of the disk 120. Furthermore, a portion of the air flow above the disk 120 produced by the rotation of the disk 120 descends along the lower portion of the air guide surface 157 of the air descending member 156 around the edge of the rotating disk 120, and the descending air F is discharged toward the lower portion of the disk 120.

Hence, the air is smoothly vertically circulated by the air ascending member 152 and the air descending member 156 in the housing 110.

According to the embodiments of the present general inventive concept, air under or above a disk in a hard disk drive is easily moved toward an upper portion or a lower portion of the disk by an air circulation unit so that the air smoothly circulates in a housing of the hard disk drive. Hence, the various embodiments of the present general inventive concept can improve an efficiency of filtering of particles and a temperature characteristic in the housing of the hard disk drive, which improves a reliability of the hard disk drive. The various embodiments of the present general inventive concept may be applied to a compact hard disk drive of up to 1 inch. Alternatively, the various embodiments of the present general inventive concept may also be applied to a hard disk drive of 2.5 inches or 3.5 inches.

Although a few embodiments of the present general inventive concept have been shown and described, it will be appreciated by those skilled in the art that changes may be made in these embodiments without departing from the general inventive concept, the scope of which is defined in the appended claims and their equivalents.

## Claims

1. A hard disk drive comprising:
a housing (110) having a base (111) and a cover (112);
a spindle motor (130) installed on the base (111);
a disk (120) mounted on the spindle motor (130) to store data;
an actuator (140) pivotally installed on the base and having a read/write head to write data on the disk (120) or to reproduce the data from the disk, and
an air circulation unit (152,156) installed in the housing (110) and adapted to impart a vertical movement component to air flow produced by rotation of the disk.

2. The hard disk drive of claim 1, wherein the air circulation unit (152,156) is partially arranged around the disk (120) positioned adjacent to an edge of the disk.

3. The hard disk drive of claim 1, wherein the air circulation unit (152,156) is installed at a position opposite to the actuator with respect to a center of the disk.

4. The hard disk drive of claim 1, wherein the air circulation unit comprises at least one of:
an air ascending member (152) to move air from a lower portion of the disk upward to an upper portion of the disk; and
an air descending member (156) to move air from the upper portion of the disk downward to the lower portion of the disk.

5. The hard disk drive of claim 4, wherein the air ascending member (152) is installed in at least one of two corners of the housing which are spaced apart from the actuator.

6. The hard disk drive of claim 4, wherein the air descending member (156) is installed in at least one of two corners of the housing which are spaced apart from the actuator.

7. The hard disk drive of claim 4, wherein the air ascending member (152) is installed in one of two corners of the housing which are spaced apart from the actuator, and the air descending member (156) is installed in the other corner.

8. The hard disk drive of claim 4, wherein the air ascending member (152) is attached to an upper surface of the base.

9. The hard disk drive of claim 4, wherein the air ascending member (152) is formed integrally with the base.

10. The hard disk drive of claim 4, wherein the air descending member (156) is attached to a lower surface of the cover.

11. The hard disk drive of claim 4, wherein the air descending member (156) is formed integrally with the cover.

12. The hard disk drive of claim 4, wherein the air ascending member (152) comprises:
an air guide surface (153) to guide an ascent of the air;
an air inlet end (154) of the air guide surface (153) positioned under a lower surface of the disk; and
an air discharge end (155) of the air guide surface positioned above an upper surface of the disk.

13. The hard disk drive of claim 12, wherein:
a spacing (G_{I}) between the air inlet end (154) of the air guide surface (153) and the lower surface of the disk is larger than half of a spacing (G_{B}) between an upper surface of the base and the lower surface of the disk, and
a spacing (Go) between the air discharge end (155) of the air guide surface (153) and the upper surface of the disk (120) is larger than half of a spacing (G_{C}) between a lower surface of the cover and the upper surface of the disk.

14. The hard disk drive of claim 12, wherein the air guide surface (153) has a profile inclined at a constant angle along a circumferential direction of the disk.

15. The hard disk drive of claim 12, wherein the air guide surface (153') has a round profile.

16. The hard disk drive of claim 12, wherein the air guide surface (153") has a streamline profile.

17. The hard disk drive of claim 4, wherein the air descending member (156) comprises:
an air guide surface (157) to guide a descent of the air;
an air inlet end (158) of the air guide surface positioned above an upper surface of the disk; and
an air discharge end (159) of the air guide surface positioned below a lower surface of the disk.

18. The hard disk drive of claim 17, wherein:
a spacing (G_{I}) between the air inlet end (158) of the air guide surface (157) and the upper surface of the disk (120) is larger than half of a spacing (G_{c}) between a lower surface of the cover and the upper surface of the disk; and
a spacing (Go) between the air discharge end (159) of the air guide surface and the lower surface of the disk is larger than half of a spacing (G_{B}) between the upper surface of the base and the lower surface of the disk.

19. The hard disk drive of claim 17, wherein the air guide surface (157) has a profile inclined at a constant angle along a circumferential direction of the disk.

20. The hard disk drive of claim 17, wherein the air guide surface (157) has a round profile.

21. The hard disk drive of claim 17, wherein the air guide surface (157) has a streamline profile.

22. The hard disk drive of claim 1, wherein the air circulation unit (152,157) has a curved shape to accommodate an edge of the disk (120) and is gradually slanted between a first circumferential end (155,158) thereof at the upper portion of the disk and a second circumferential end (154,159) thereof at the lower portion of the disk.

23. The hard disk drive of claim 1, wherein the air circulation unit (152,157) changes a horizontal direction of the air flow produced by rotation of the disk (120) to a slanted direction having said vertical movement component.

24. A storage medium, comprising:
a housing (110);
a hard disk assembly disposed in the housing; and
an air circulation unit (152,156) disposed at an inner wall of the housing and having a predetermined surface (153,157) to guide air with a vertical movement component in the housing.

25. The storage medium of claim 24, wherein the air circulation unit comprises:
a first air circulation unit (152b) disposed at a first location on the inner wall of the housing to move air with a predetermined vertical movement component in the housing, and
a second air circulation unit (152a) disposed at a second location on the inner wall of the housing to move air with the same predetermined vertical movement component in the housing.

26. The storage medium of claim 24, wherein the air circulation unit comprises:
a curved portion having a surface extending between an upper portion of the housing and a lower portion of the housing; and
a slanted portion (153b,c) connected to the curved portion and the inner wall of the housing along which air flows between the upper and lower portions of the housing.

27. The storage medium of claim 26, wherein the slanted portion has one of a flat surface, a concave surface, and a streamlined surface.

28. The storage medium of claim 24, wherein the air circulation unit comprises:
first and second plates (152b,a) arranged in a corresponding manner and extending between an upper portion and a lower portion of the housing to guide the air therebetween.

29. The storage medium of claim 28, wherein the first plate (152b) is disposed adjacent to the hard disk assembly and the second plate (152a) is disposed between the first plate and the housing such that an air passageway (152c) is formed between the first and second plates.

30. The storage medium of claim 29, wherein the first plate comprises:
a first cutout portion (154) disposed in a first horizontal end of the first plate adjacent to a lower portion of the housing; and
a second cutout portion (155) disposed in a second horizontal end of the first plate adjacent to an upper portion of the housing such that air flows into the air passageway (152c, 152c') between the first and second plates via the first and second cutout portions.

31. The storage medium of claim 24, wherein the air circulation unit comprises a curved member (152) extending vertically along the inner wall of the housing and having a first circumferential end (154) and a second circumferential end (155) opposite the first circumferential end, and an inclined surface (153b") disposed between the curved member and the inner wall and gradually slanted between the first and second circumferential ends of the curved member.

32. The storage medium of claim 31, wherein the inclined surface (153b") includes at least one of a hole extending therethrough and a groove disposed in a top surface thereof.

33. The storage medium of claim 24, wherein the air circulation unit comprises:
a first air circulation unit disposed at an upper portion of the housing to change a first horizontal air flow to a downward airflow; and
a second air circulation unit disposed at a lower portion of the housing to change a second horizontal air flow to an upward airflow.

34. The storage medium of claim 24, wherein the air circulation unit is disposed in a corner of the housing and is curved with respect to the corner with a predetermined radius of curvature.

35. The storage medium of claim 24, further comprising:
at least one filter (117,118) disposed at an upper portion of the housing (110) to receive the air moved from a lower portion of the housing by the air circulation unit and to filter the received air.

36. The storage medium of claim 24, wherein the hard disk assembly comprises:
a disk (120) disposed in a center of the housing (110) to rotate therein; and
an actuator (140) disposed at the inner wall of the housing opposite the air circulation unit with respect to a center of the disk to move a head with respect to the disk.

37. The storage medium of claim 24, wherein the hard disk assembly comprises a disk (120) to be rotated in the housing (110) to generate an essentially horizontal air flow wherein the air circulation unit is adapted to change a portion of the horizontal air flow into one or more air flows with a vertical movement component about an edge of the disk.
